# EUROPÄISCHE PATENTANMELDUNG

(11) **EP 1 275 460 A1**
(43) Veröffentlichungstag der Anmeldung: **15.01.2003**
(21) Anmeldenummer: 02010909.6
(22) Anmeldetag: 16.05.2002
(51) Int. Cl.: B23D 65/00, B23D 61/02

(54) **Kreissägeblatt mit Räumschneiden**

(30) Priorität: 10.07.2001 DE 20111424 U
(71) Anmelder: Ake Knebel GmbH & Co., 72336 Balingen-Engstlatt (DE)
(72) Erfinder: Knebel, Albert, 72336 Balingen (DE)
(74) Vertreter: Möbus, Daniela, Dr.-Ing.

(57) **Zusammenfassung**

Ein Kreissägeblatt mit mindestens einer seitlich am Kreissägeblatt angeordneten Räumschneide, wobei die in Drehrichtung des Sägeblatts weisende Frontfläche (6) der mindestens einen Räumschneide (3) ein Profil aufweist.

## Beschreibung

Die Erfindung betrifft Kreissägeblätter mit Räumschneiden. Kreissägeblätter weisen an ihrem äußeren Umfang Sägezähne auf, die die eigentliche Sägearbeit leisten. Zusätzlich können seitlich am Sägeblatt eine oder mehrere so genannte Räumschneiden angeordnet sein. Diese Räumschneiden bewirken ein Entfernen von Spänen aus dem Schnittspalt und ein Nachschneiden des Spalts. Damit wird ein Freischneiden des Sägeblatts erreicht. Ohne dieses Freischneiden des Sägeblatts durch solche Räumschneiden besteht gerade beim Sägen von feuchtem Holz die Gefahr, dass, nachdem das Kreissägeblatt beim Sägen in eine gewisse Tiefe des Holzes eingedrungen ist, sich der Schnittspalt wieder verringert, was zu einem Festklemmen des Kreissägeblatts führen kann.

Die Räumschneiden können in unterschiedlicher Anzahl und Position auf dem Kreissägeblatt angeordnet sein. In der Regel sind sie so angeordnet, dass die gesamte vorgesehene Eingriffstiefe des Sägeblatts in das zu sägende Material von den Räumschneiden abgedeckt wird.

Die Räumschneiden bestehen häufig aus Hartmetallstäben mit einem Rechteckquerschnitt. Die Befestigung der Räumschneiden am Kreissägeblatt kann beispielsweise durch Löten erfolgen.

Nach dem Befestigen der Räumschneiden auf dem Kreissägeblatt werden die Räumschneiden üblicherweise beidseitig geschliffen, wobei ihre Schnittbreite normalerweise geringfügig schmaler als die am Außenumfang der Sägezähne gemessene Schnittbreite des Sägeblatts ausgebildet wird.

Die in die Drehrichtung des Kreissägeblatts weisende Frontfläche bleibt unbearbeitet und erstreckt sich annähernd rechtwinklig zur Ebene des Kreissägeblatts.

Der Erfindung liegt die Aufgabe zugrunde, eine Kreissägeblatt mit einer oder mehreren Räumschneiden anzugeben, bei dem die Räumwirkung durch den Nachschnitt und die Spanentfernung verbessert ist.

Die gestellte Aufgabe wird erfindungsgemäß mit dem Kreissägeblatt mit mindestens einer Räumschneide, das die im Hauptanspruch angegebenen Merkmale aufweist, gelöst. Die Unteransprüche geben bevorzugte Weiterbildungen an.

Beim erfindungsgemäßen Kreissägeblatt weist die mindestens eine Räumschneide an ihrer in Drehrichtung des Kreissägeblatts weisenden Frontfläche ein Profil auf. Dieses Profil kann beispielsweise in Form einer Vertiefung ausgestaltet sein. Die Vertiefung kann sich über die gesamte Länge der Frontfläche der Räumschneide oder nur über einen Teil der Länge erstrecken. Die Vertiefung kann unterschiedliche Querschnitte, wie beispielsweise einen V-förmigen, einen U-förmigen oder einen halbrunden Querschnitt, aufweisen.

Die bessere Räumwirkung der mindestens einen Räumschneide des erfindungsgemäßen Kreissägeblatts ergibt sich dadurch, dass sich durch die Profilierung der Frontfläche der Räumschneide Flächen ergeben, die in einem Winkel von weniger als 90° zu den Schnittoberflächen verlaufen. Durch diesen spitzen Winkel erhält die Frontfläche der Räumschneide eine größere Schnittigkeit zu den Schnittoberflächen hin. Die schrägen Flächenanteile der profilierten Frontfläche der Räumschneide bewirken auch eine verbesserte Ableitung des Räummaterials zur Mittelebene des Kreissägeblatts hin. Insgesamt wird dadurch eine Erhöhung der Räum- und Abtragswirkung der Räumschneide und damit des mit dieser Räumschneide versehenen Kreissägeblatts erreicht.

Die Profilierung der Frontfläche der Räumschneide kann erfolgen, bevor oder nachdem sie am Kreissägeblatt befestigt wird. Die Profilierung kann durch Schleifen oder Erodieren erfolgen. Es kann aber auch ein mit dem gewünschten Profil versehenes Stabmaterial bereitgestellt werden, von dem dann die Räumschneiden in den gewünschten Längen abgeschnitten werden.

Die Räumschneide kann so auf dem Kreissägeblatt angeordnet werden, dass die Frontfläche der Räumschneide mittig oder außermittig zur Sägeblattmittenebene angeordnet ist.

Da es vorteilhaft ist, wenn der gesamte Radius des Kreissägeblatts bzw. zumindest dessen gesamte vorgesehene Eingriffstiefe in das zu sägende Material mit einer Räumschneide abgedeckt wird, so kann entweder eine Räumschneide vorgesehen werden, die sich über diesen gesamten Radius erstreckt, oder es können verschiedene kürzere Räumschneiden auf unterschiedlichen Teilkreisen des Kreissägeblatts in ergänzender oder überlappender Weise angeordnet werden.

Die eine oder mehrere Räumschneiden können auf unterschiedliche Arten auf dem Kreissägeblatt angeordnet sein. Vorteilhaft ist es, wenn sie in dafür vorgesehenen Aussparungen angeordnet werden. Die Räumschneiden können in nicht lösbarer Weise, beispielsweise durch Löten, Kleben oder Vernieten, oder in lösbarer Weise, beispielsweise durch eine Schraubverbindung, mit dem Kreissägeblatt verbunden sein.

Das Material, aus dem die Sägezähne des Kreissägeblatts bestehen oder mit dem sie beschichtet sind, richtet sich nach dem zu sägenden Material. So kommt als Material beispielsweise Hartmetall, Diamant, Keramik oder ein Mischwerkstoff in Frage. Dies gilt auch für das Material der mindestens einen auf dem Kreissägeblatt angeordneten Räumschneide.

Ein Ausführungsbeispiel eines erfindungsgemäß ausgebildeten Kreissägeblatts mit hier vier vorgesehenen Räumschneiden wird nachfolgend anhand der beiliegenden Zeichnung erläutert. Gleiche Elemente sind dabei in allen Zeichnungsfiguren mit den gleichen Bezugszeichen versehen.

Es zeigen:
- Fig. 1: eine Seitenansicht eines Ausführungsbeispiels eines erfindungsgemäß ausgebildeten Kreissägeblatts mit vier Räumschneiden;
- Fig. 2a: eine Räumschneide mit halbrund ausgebildeter Frontfläche;
- Fig. 2b: eine Räumschneide mit U-förmig ausgebildeter Frontfläche; und
- Fig. 2c: eine Räumschneide mit V-förmig ausgebildeter Frontfläche.

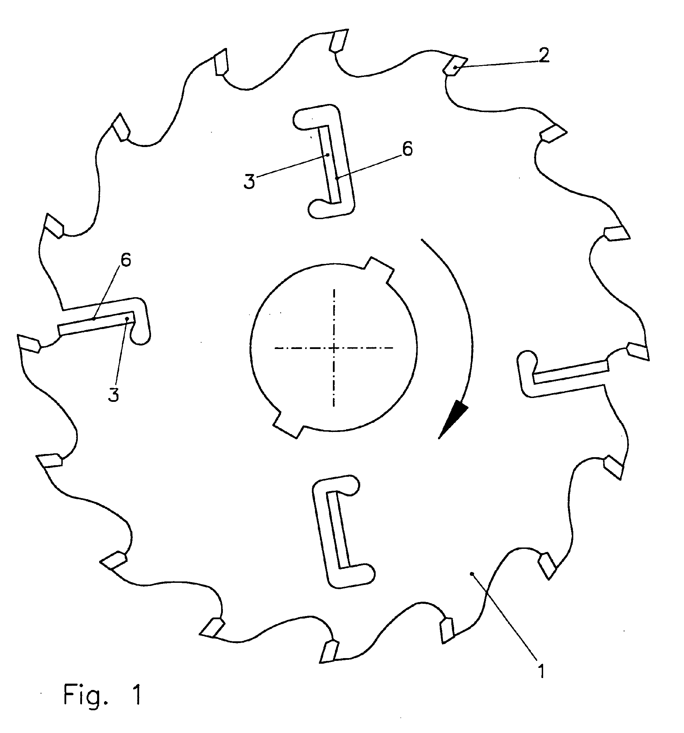

Fig. 1 zeigt eine Seitenansicht einer Ausführungsform eines erfindungsgemäß ausgebildeten Kreissägeblatts mit vier Räumschneiden.

Das Kreissägeblatt 1 weist an seinem äußeren Umfang Sägezähne 2 auf. Das Kreissägeblatt wird beim Sägen in der Richtung betrieben, die durch den Pfeil angedeutet ist. Auf verschiedenen Teilkreisdurchmessern des Kreissägeblatts 1 sind hier insgesamt vier Räumschneiden 3 so angeordnet, dass die gesamte vorgesehene Eingriffstiefe des Kreissägeblatts in das zu sägende Material durch die Räumschneiden 3 abgedeckt wird. Die Räumschneiden 3 weisen jeweils eine in Drehrichtung des Kreissägeblatts weisende Frontfläche 6 auf.

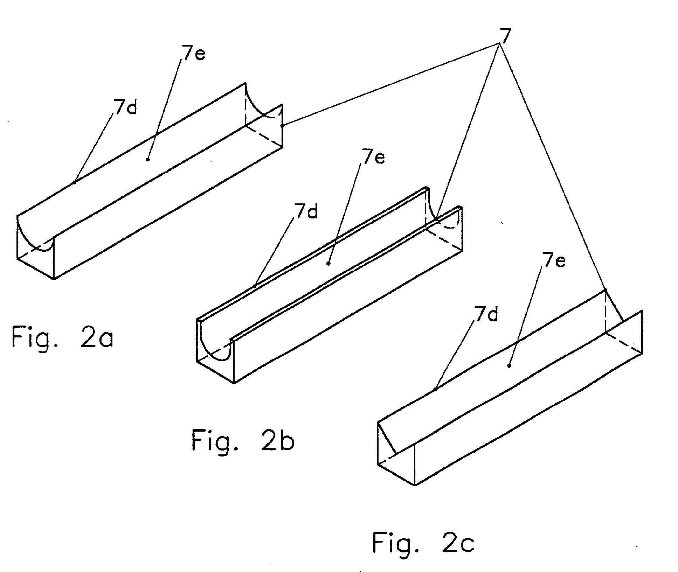

Diese Frontfläche 6 kann unterschiedlich profiliert sein. Fig. 2a zeigt beispielsweise eine Frontfläche einer Räumschneide, die eine über die gesamte Länge der Räumschneide 3 verlaufende Vertiefung 7 mit halbkreisförmigen Querschnitt aufweist. Fig. 2b zeigt eine Frontfläche einer Räumschneide, die eine über die gesamte Länge der Räumschneide 3 verlaufende Vertiefung 7 mit U-förmigen Querschnitt aufweist. Und Fig. 2c zeigt schließlich eine Frontfläche einer Räumschneide, die eine über die gesamte Länge der Räumschneide 3 verlaufende Vertiefung 7 mit V-förmigem Querschnitt aufweist.

Es sind auch andere Profile, als die in den Fig. 2a bis 2c dargestellten Profile bei der vorliegenden Erfindung verwendbar. Vorteilhaft ist jedoch, wenn der Angriffswinkel der Kante 7d der Räumschneide geringer als 90° ist, und wenn das Profil zur Ebene des Kreissägeblatts 1 schräg verlaufende Frontflächenabschnitte 7e aufweist. Dadurch wird nämlich eine verbesserte Schnittigkeit und eine verbesserte Ableitung des Räummaterials erreicht.

### Bezugszeichenliste:

- 1: Kreissägeblatt
- 2: Sägezahn
- 3: Räumschneide
- 6: Frontfläche der Räumschneide
- 7: Vertiefung
- 7d: Kante der Frontfläche
- 7e: schräger Frontflächenabschnitt

## Patentansprüche

1. Kreissägeblatt mit mindestens einer seitlich am Kreissägeblatt angeordneten Räumschneide, **dadurch gekennzeichnet, dass** die in Drehrichtung des Sägeblatts weisende Frontfläche (6) der mindestens einen Räumschneide (3) ein Profil aufweist.

2. Kreissägeblatt nach Anspruch 1, **dadurch gekennzeichnet, dass** das Profil der Frontfläche (6) der mindestens einen Räumschneide (3) so ausgebildet ist, dass die Kante (7d) der Räumschneide (3) einen Angriffswinkel gegenüber dem zu sägenden Material von weniger als 90° aufweist, und dass das Profil der Frontfläche (6) zur Ebene des Kreissägeblatts (1) schräg verlaufende Frontflächenabschnitte (7e) umfasst.

3. Kreissägeblatt nach Anspruch 1 oder 2, **dadurch gekennzeichnet, dass** das Profil der Frontfläche (6) in Form einer Vertiefung (7) ausgebildet ist.

4. Kreissägeblatt nach Anspruch 3, **dadurch gekennzeichnet, dass** die Vertiefung (7) über die gesamt Länge der Frontfläche (6) der mindestens einen Räumschneide (3) verläuft.

5. Kreissägeblatt nach Anspruch 3 oder 4, **dadurch gekennzeichnet, dass** die Vertiefung (7) einen V-förmigen, einen U-förmigen oder einen halbrunden Querschnitt aufweist.

6. Kreissägeblatt nach einem der vorherigen Ansprüche, **dadurch gekennzeichnet, dass** die Frontfläche (6) der mindestens einen Räumschneide (3) mittig zur Sägeblattmittenebene angeordnet ist.

7. Kreissägeblatt nach einem der Ansprüche 1 bis 5, **dadurch gekennzeichnet, dass** die Frontfläche (6) der mindestens einen Räumschneide (3) außermittig zur Sägeblattmittenebene angeordnet ist.

8. Kreissägeblatt nach einem der vorherigen Ansprüche, **dadurch gekennzeichnet, dass** sich die mindestens eine Räumschneide (3) über den gesamten Radius des Kreissägeblatts (1) erstreckt.

9. Kreissägeblatt nach einem der Ansprüche 1 bis 7, **dadurch gekennzeichnet, dass** mehrere Räumschneiden (3) auf dem Kreissägeblatt (1) in versetzter Anordnung so angeordnet sind, dass sie zusammen den gesamten Radius des Kreissägeblatts (1) oder zumindest dessen vorgesehene Eingriffstiefe in das zu sägende Material abdecken.

10. Kreissägeblatt nach einem der vorherigen Ansprüche, **dadurch gekennzeichnet, dass** die mindestens eine Räumschneide (3) in einer Aussparung auf dem Kreissägeblatt (1) angeordnet ist.

11. Kreissägeblatt nach einem der vorherigen Ansprüche, **dadurch gekennzeichnet, dass** die mindestens eine Räumschneide (3) in lösbarer oder nicht lösbarer Weise mit dem Kreissägeblatt (1) verbunden ist.

12. Kreissägeblatt nach Anspruch 10, **dadurch gekennzeichnet, dass** die mindestens eine Räumschneide (3) mit dem Kreissägeblatt (1) durch Löten, Kleben, Verschrauben oder Vernieten verbunden ist.

13. Kreissägeblatt nach einem der vorherigen Ansprüche, **dadurch gekennzeichnet, dass** die Sägezähne (2) des Kreissägeblatts (1) aus Hartmetall, Diamant oder Keramik bestehen oder eine Beschichtung aus einem derartigen Material aufweisen.

14. Kreissägeblatt nach einem der vorherigen Ansprüche, **dadurch gekennzeichnet, dass** die mindestens eine Räumschneide (3) aus Hartmetall, Keramik oder Mischwerkstoffen besteht oder eine Beschichtung aus einem derartigen Material aufweist.

15. Kreissägeblatt nach einem der vorherigen Ansprüche, **dadurch gekennzeichnet, dass** das Profil der Frontfläche (6) der mindestens einen Räumschneide (3) vor dem Befestigen der Räumschneide (3) am Kreissägeblatt (1) ausgebildet wird.

16. Kreissägeblatt nach einem der Ansprüche 1 bis 14, **dadurch gekennzeichnet, dass** das Profil der Frontfläche (6) der mindestens einen Räumschneide (3) nach dem Befestigen der Räumschneide (3) am Sägeblatt (1) ausgebildet wird.

17. Kreissägeblatt nach einem der vorherigen Ansprüche, **dadurch gekennzeichnet, dass** das Profil der Frontfläche (6) der mindestens einen Räumschneide (3) durch Schleifen oder Erodieren hergestellt wird.

18. Kreissägeblatt nach einem der Ansprüche 1 bis 14, **dadurch gekennzeichnet, dass** die mindestens eine Räumschneide (3) durch ein Abtrennen von einem vorgeformten, profilierten Stabmaterial in der gewünschten Länge erhalten wird.
